# EUROPÄISCHE PATENTSCHRIFT

(11) **EP 1 695 868 B1**
(45) Veröffentlichungstag und Bekanntmachung des Hinweises auf die Patenterteilung: **27.02.2008**
(21) Anmeldenummer: 06011451.9
(22) Anmeldetag: 02.05.1998
(51) Int. Cl.: B60Q 1/14

(54) **Multifunktionstastschalter**
Multifunction push-button switch
Interrupteur multifonction à bouton poussoir

(30) Priorität: 05.05.1997 DE 19718979
(43) Veröffentlichungstag der Anmeldung: 30.08.2006
(62) Teilanmeldung aus: 98108008.8
(73) Patentinhaber: Delphi Technologies, Inc., Troy, Michigan 48007 (US)
(72) Erfinder: Leng, Peter, 55128 Mainz (DE)
(74) Vertreter: Becker, Bernd

(56) Entgegenhaltungen:
- EP-A- 0 159 282
- EP-A- 0 822 119
- EP-A- 0 832 786
- DE-A- 4 339 095
- DE-C- 4 436 291

## Beschreibung

Die Erfindung bezieht sich auf einen Multifunktionstastschalter zur Befestigung an einem Lenkrad eines Kraftfahrzeuges, mit einem länglichen Gehäuse, in dem eine Schaltelemente aufweisende Kontakteinheit angeordnet ist, und mit mindestens einer selbsttätig rückstellenden sowie kippbar gelagerten Taste mit einem auf die Schaltelemente einwirkendem Schaltglied und einem mit zwei gegenüberliegenden Betätigungsflächen versehenen Betätigungswulst.

Aus der DE 195 11 878 A1 ist ein elektrischer Tastschalter bekannt, der mit einem Schaltelemente aufnehmenden Gehäuse und mehreren selbsttätig rückstellenden sowie außermittig gelagerten Tasten mit je einem auf die Schaltelemente einwirkenden Schaltstößel ausgerüstet ist. Jede Taste weist einen mit zwei gegenüberliegenden Betätigungsflächen versehenen Betätigungswulst auf, der annähernd achsparallel zum Tastenlager ausgerichtet ist. Die auf der Seite des Tastenlagers etwa parallel zum Gehäuse eingeleitete Betätigungskraft hat die gleiche Wirkrichtung auf die Taste wie die auf der gegenüberliegenden Seite etwa senkrecht zum Gehäuse eingeleitete Betätigungskraft. In der Regel sind zwei sich diametral gegenüberliegende Tastschalter mittels an den Stirnseiten des Gehäuses angeformten Befestigungsflanschen derart mit der Lenkradschüssel des Lenkrades eines Kraftfahrzeuges verbunden, daß die Betätigungsflächen der Tasten durch ein Blendenloch zwischen dem Lenkradkranz und der Lenkradschüssel hindurchragen. Solche elektrischen Tastschalter eignen sich besonders zum Auslösen von Schaltfunktionen, wie beispielsweise zur temporären Geschwindigkeitssteuerung (Tempomat) des Kraftfahrzeuges und/oder zur Steuerung von Betriebsfunktionen einer im Fahrzeug vorhandenen Radio-Kassetten-Einheit. Im Gehäuse des Tastschalters ist eine als Kontakteinheit ausgebildete Leiterplatte untergebracht, der eine am Gehäuse befestigte Federeinheit zugeordnet ist. Durch Betätigen einer Taste wirkt der zugehörige Schaltstößel auf die Federeinheit und verbindet oder unterbricht Strompfade auf der Leiterplatte. Die Leiterplatte selbst ist starr im Gehäuseinnenraum befestigt. Häufig werden solche Leiterplatten mit Schaltelementen, vorzugsweise mit Mikroschaltern, versehen, durch welche Schalt- und Betriebsfunktionen ausgelöst werden. Ein wesentlicher Nachteil der Tastschalter besteht in der außermittigen Lagerung der Tasten am Gehäuse und in der ungleichförmigen Ausbildung des Gehäuses, da der eine Tastschalter für die Anbringung an der linken Seite und der andere Tastschalter für die Anbringung an der rechten Seite der Lenkradschüssel vorgesehen ist. Demgemäß ist die Außenkontur des Gehäuses an diesen Bereich des Blendeloches zwischen dem Lenkradkranz und der Lenkradschüssel angepaßt, wobei hierzu die außermittige Lagerung der Tasten am Gehäuse geeignet ist. Dadurch ist die Befestigung des Tastschalters jedoch nur an der dafür vorgesehenen Seite der Lenkradschüssel möglich, so daß für einen Lenkradtyp zwei Tastschalter unterschiedlicher Ausbildung gefertigt werden müssen. Diese getrennte Herstellung ist zwangsläufig mit hohen Kosten verbunden.

Im Weiteren offenbart die den nächstliegenden Stand der Technik bildende DE 44 36 291 C1 einen Multifunktionstastschalter zur Befestigung an einem Lenkrad eines Kraftfahrzeuges, mit einem länglichen Gehäuse, in dem eine Schaltelemente aufweisende Kontakteinheit angeordnet ist, und mit mindestens einer selbsttätig rückstellenden sowie kippbar gelagerten Taste mit einem auf die Schaltelemente einwirkendem Schaltglied und einem mit zwei gegenüberliegenden Betätigungsflächen versehenen Betätigungswulst.

Es ist Aufgabe der Erfindung, einen Multifunktionstastschalter der eingangs genannten Art zu schaffen, der kostengünstig herzustellen und variabel am Lenkrad eines Kraftfahrzeuges einsetzbar sowie an die Form des Lenkrades anpassbar ist.

Erfindungsgemäß wird die Aufgabe dadurch gelöst, daß
- die Taste mittig am Gehäuse gelagert ist und einen quer zu ihrer Lagerachse symmetrischen Querschnitt aufweist, wobei die Lagerachse parallel zum Betätigungswulst verläuft, und
- das Gehäuse im Längsschnitt unsymmetrisch ausgebildet ist und an seiner Unterseite im Bereich einer Längsseite eine sich im Wesentlichen radial zur Lenksäule des Kraftfahrzeuges erstreckende Befestigungslasche aufweist.

Die unsymmetrische Ausbildung des Multifunktionstastschalters im Längsschnitt, insbesondere durch einen unterschiedlichen Krümmungsverlauf der in das Blendenloch zwischen dem Lenkradkranz und der Lenkradschüssel angepaßten Gehäuseenden, wenn beispielsweise das Blendenloch durch die Form des Lenkrades eine unregelmäßige Kontur besitzt, ermöglicht einen variablen Einbau.

Die symmetrisch ausgebildeten Tasten gestatten eine variable Anbringung je nach Bedarf am Gehäuse des Multifunktionstastschalters.

Nach einer Weiterbildung der Erfindung weist das Gehäuse zueinander beabstandete, quer zu dessen Längsachse angeordnete Lagerlaschen auf, an denen jeweils gegenüberliegende Lagerzapfen bzw. Lagerbohrungen mittig ausgebildet sind. Um eine Taste mit den entsprechenden Lagerlaschen des Gehäuses in Eingriff bringen zu können, besitzt die Taste quer zu deren Lagerachse angeordnete Seitenflansche, die eine Lagerbohrung bzw. einen Lagerzapfen aufweisen. Dadurch wird eine beidseitige Kippbewegung der Taste um die Lagerachse erreicht, die lediglich durch die entgegengesetzt zum Betätigungswulst befindlichen Ränder der Taste begrenzt wird.

Im allgemeinen werden solche Multifunktionstastschalter und deren wesentlichen Teile aus Kunststoff durch Spritzgießtechnik hergestellt. Insofern sind die Lagerlaschen mit dem Gehäuse und die Seitenflansche der Taste zweckmäßigerweise jeweils einstückig ausgebildet, um den Herstellungsaufwand und die Herstellungskosten zu senken.

Durch die Kunststoff-Spritzgießtechnik können an dem jeweiligen Teil auf einfache Weise Funktionselemente angebracht werden, die nicht separat hergestellt werden müssen. Daher ist nach einer weiteren Ausbildung der Erfindung an der Innenseite jeder Betätigungsfläche der Taste jeweils ein Schaltglied angeformt, das sich im wesentlichen lotrecht zum zugeordneten Schaltelement auf der Kontakteinheit erstreckt.

Ferner ist bevorzugt vorgesehen, daß die Taste gegen das Gehäuse federbelastet ist. Hierzu ist an der Innenseite des Betätigungswulstes der Taste eine Rastnase angeformt. Weiterhin ist am Sockel des Gehäuses eine einen federbelasteten Rastbolzen aufnehmende Hülse ausgebildet, die zum Betätigungswulst der Taste gerichtet ist, wobei der Rastbolzen an der Rastkurve anliegt. Der federbelastete Rastbolzen unterstützt die Kippbewegung und Rückstellung der Taste relativ zum Gehäuse.

Nach einer Weiterbildung der erfindungsgemäßen Lösung ist die Kontakteinheit mittels am Gehäuse ausgebildeter Klemmelemente am Sockel des Gehäuses lösbar gehalten. Die Kontakteinheit ist damit im Gehäuse lagegesichert. Die lösbare Klemmverbindung ermöglicht aber auch eine Drehung der die Schaltelemente enthaltenden Kontakteinheit um 180°, so daß sich die Schaltelemente entweder an der einen oder anderen Längsseite des Gehäuses befinden. Je nach Einbaulage des Multifunktionstastschalters kann also die Kontakteinheit in die vorgesehene Stellung im Gehäuse ausgerichtet und dort befestigt werden.

Bevorzugt ist die Kontakteinheit als Leiterplatte ausgebildet, während die Schaltelemente der Kontakteinheit Mikroschalter, Schaltbrücken oder dergleichen sind. Besonders geeignet sind auf Grund der hohen Funktionstüchtigkeit und leichten und kostengünstigen Herstellbarkeit die Mikroschalter.

Weiterhin weist bevorzugt zumindest die einem Bediener zugewandte Betätigungsfläche der Taste eine transparente oder opake Symbolfläche auf, die durch ein unterhalb der Taste angeordnetes Leuchtelement beleuchtet wird. Insbesondere nachts und auch in einer Phase, in der sich ein Bediener an eine Tastenkombination gewöhnen muß, wird durch das Anzeigen und Beleuchten der Symbolfläche für die Schaltfunktionen eine Fehlbedienung ausgeschlossen. Durch Drehen oder Austauschen der Taste kann diese an der Stelle des Multifunktionstastschalters eingesetzt werden, an der die entsprechende Schaltfunktion an der Kontakteinheit vorgesehen ist, welche der Symbolik auf der Symbolfläche der Taste entspricht. Natürlich kann auch auf jeder Betätigungsfläche der Taste eine Symbolfläche angebracht werden, um die Einsatzvariationen der Taste noch zu verbessern.

Um die volle Lichtintensität auf die Symbolfläche der Taste zu lenken und deren Umgebung vor der Lichteinwirkung abzuschirmen, erstreckt sich vom Sockel des Gehäuses lotrecht zur Symbolfläche auf der Betätigungsfläche der Taste ein Streulicht abschaltender Lichtleitkanal.

Zweckmäßigerweise weist weiterhin der am Lenkrad befestigte Tastschalter zumindest drei nebeneinander angeordnete Tasten auf. Somit können mehrere Schaltfunktionen an einem elektrischen Tastschalter realisiert werden. Hierbei weisen die mittlere oder die äußeren Tasten an ihren jeweils zueinander gerichteten Seitenflanschen Dichtungsbunde auf, die den Spalt zwischen den benachbarten Tasten überbrücken. Die Dichtungsbunde verhindern das Eindringen von Schmutz in den elektrischen Tastschalter. Darüber hinaus wird das ungewollte Abstrahlen von Licht verhindert, das von dem im Gehäuse vorhandenen Leuchtelement abgegeben wird.

In vorteilhafter Ausgestaltung der Erfindung ist der Tastschalter derart im Bereich eines Lenkrades des Kraftfahrzeuges befestigt, daß eine den Lenkradkranz des Lenkrades umgreifende Hand mit ihrem Daumen auf die eine Betätigungsfläche der Taste und mit den Fingern auf die andere Betätigungsfläche einwirken kann. Die Hand kann sich beim Umgreifen des Lenkrades am Lenkradkranz abstützen. Das richtige Dosieren der erforderlichen Betätigungskraft ist sonach sehr leicht möglich. Analog den Möglichkeiten der natürlichen Bewegung des Daumens bzw. der Finger wird die Betätigungskraft eingeleitet, wobei bei der Betätigung des Multifunktionstastschalters der Griff um den Lenkradkranz nicht gelöst werden muß.

Um den körperlichen Gegebenheiten unter Berücksichtigung der Ausrichtung der Gelenke der Finger und des Daumens zu entsprechen, ist nach einer vorteilhaften Weiterbildung des Multifunktionstastschalters dieser derart dem Lenkradkranz zugeordnet, daß der Betätigungswulst der Taste hinter dem Lenkradkranz annähernd parallel und zurückversetzt an dem Lenkradkranz verläuft. Dies gewährleistet eine optimale Zuordnung der Taste zu den Fingern bzw. dem Daumen.

Bei einer weiteren Ausgestaltung ist das Gehäuse mittels der Befestigungslasche mit dem Lenkrad verbunden, wobei die Betätigungsflächen der Taste durch ein Blendenloch in einer die Lenkradnabe umgebenden Lenkradschüssel hindurchragen und im Bereich der Taste keine Lenkradspeichen vorgesehen sind. Wird das von den Händen geführte Lenkrad gedreht, so dreht sich die Taste mit gleichem Winkel mit. Auch in kritischen Situationen ist das Betätigen der Taste möglich, ohne die Hand vom Lenkrad zu nehmen. Darüber hinaus ist der freie Blick auf die Taste stets sichergestellt.

Um den vorhandenen Platz am Lenkradkranz des Lenkrades vor allem zwischen zwei Lenkradspeichen auszunutzen und möglichst viele Schaltfunktionen realisieren zu können, sind im Bereich des Lenkrades des Kraftfahrzeuges vorzugsweise zwei sich diametral gegenüberliegende Tastschalter angeordnet. Damit können die Tasten jedes Tastschalters und die Schaltelemente der Kontakteinheit mit unterschiedlichen Schaltfunktionen belegt werden. Sonach ist es möglich, die Tasten jedes Tastschalters und die Schaltelemente der Kontakteinheit mit Schaltfunktionen zum Steuern der Fahreigenschaften des Kraftfahrzeuges bzw. zum Steuern für ein im Kraftfahrzeug befindliches Radio- und/oder Kassettenabspiel- und/oder CD-Abspiel- und/oder CD-Wechslergerät zu belegen.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines in der Zeichnung dargestellten Ausführungsbeispieles näher erläutert. Es zeigt:
- Fig. 1: eine Ansicht auf das Lenkrad eines Kraftfahrzeuges mit zwei Multifunktionstastschaltern,

- Fig. 2: einen Schnitt durch das Lenkrad gemäß Fig. 1 entlang der Linie II-II,
- Fig. 3: eine Ansicht auf das Lenkrad gemäß Fig. 1 in Richtung des Pfeiles III mit ausgebrochenem Lenkradkranz,
- Fig. 4: eine perspektivische Explosionsdarstellung auf einen erfindungsgemäßen Multifunktionstastschalter,
- Fig. 5: eine Rückansicht einer Taste des Multifunktionstastschalters.

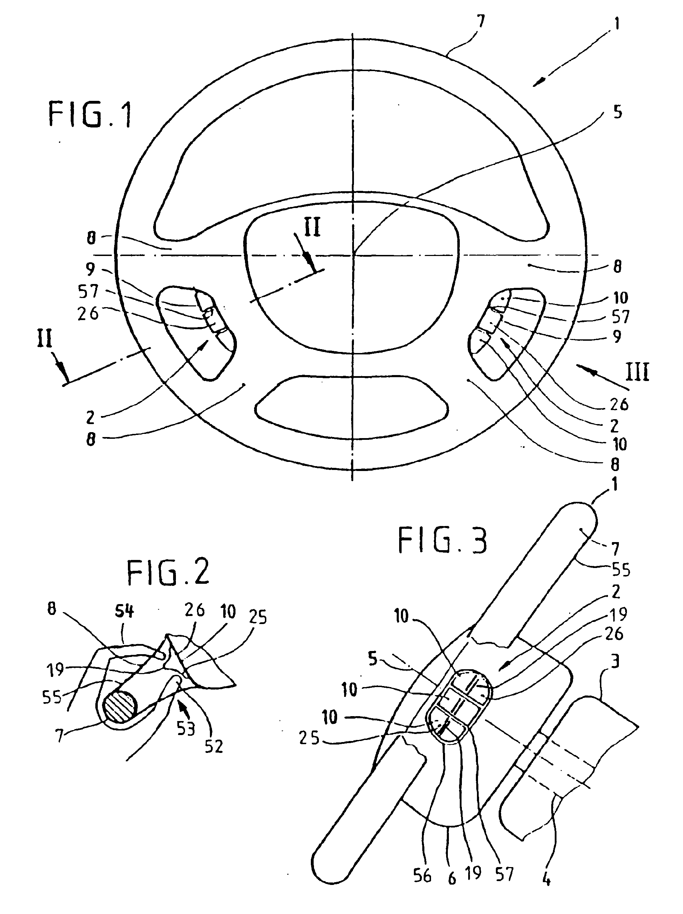

In den Fig. 1 bis 3 ist ein Lenkrad 1 dargestellt, dem eine Schaltereinheit 2 zugeordnet ist. Hinter dem Lenkrad 1 liegt ein Mantelrohr 3, in dem die Lenksäule 4 gelagert ist, an deren Ende sich das Lenkrad 1 befindet. Konzentrisch zum Lenkrad 1 ist die Lenkradnabe 5 angeordnet, die die Lenkradschüssel 6 umgibt. Die Lenkradschüssel 6 nimmt den Airbag, den Hupenkontakt und ein elektrisches Verbindungssystem auf, durch das der Kontakt vom drehenden Lenkrad 1 zum feststehenden Mantelrohr 3 übertragen wird. Das Lenkrad 1 besitzt einen Lenkradkranz 7, der über Lenkradspeichen 8 mit der die Lenkradnabe 5 umgebenen Lenkradschüssel 6 verbunden ist. Die Schaltereinheit 2, die in der Lenkradschüssel 6 angeordnet ist, besteht aus zwei Multifunktionstastschaltern 9, nachfolgend als Tastschalter bezeichnet, von denen an jeder Seite des Lenkrades 1 einer angeordnet ist. Jeder der Tastschalter 9 besitzt drei Tasten 10, die nebeneinander und vom Bediener aus sichtbar angeordnet sind.

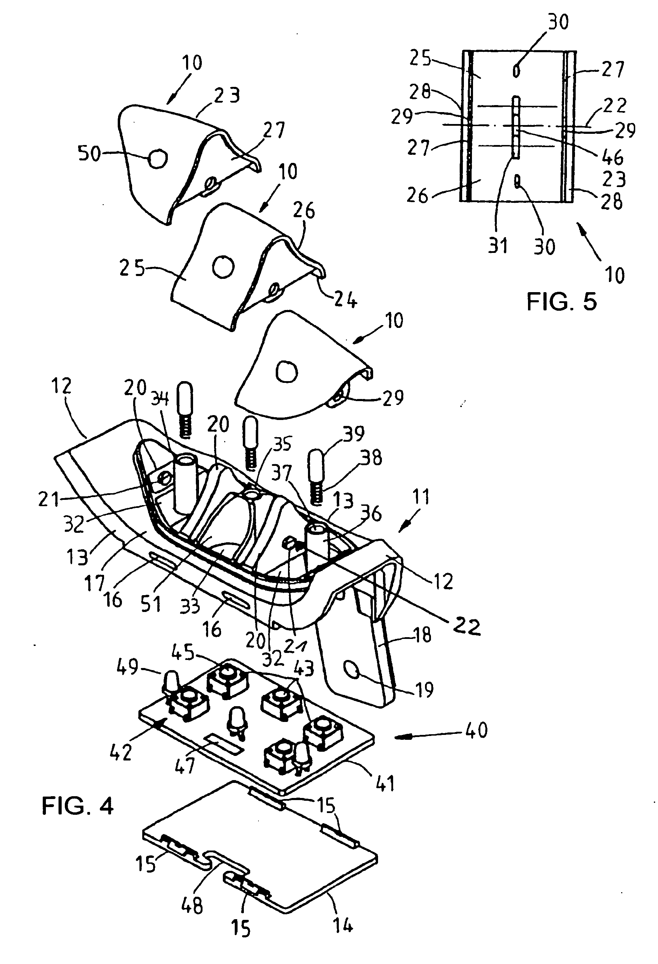

Der Tastschalter 9 weist gemäß Fig. 4 ein annähernd rechteckförmiges Gehäuse 11 mit Schmalseiten 12 und Längsseiten 13 auf. Der Rand der Längsseiten 13 und der Schmalseiten 12 des Gehäuses 11 steht erhaben über die Tasten 10 vor. Der Rand dient als Abstandssicherung zwischen einem Lenkrad-Blendenloch 56 und den Tasten 10, damit die Tasten 10 nicht durch die Lenkradnabe 5 beeinträchtigt werden. An der Unterseite des Gehäuses 11 ist eine Bodenplatte 14 vorgesehen, die an ihren seitlichen Randbereichen zueinander beabstandete Klipsnasen 15 umfaßt. Diese Klipsnasen 15 greifen in dazu korrespondierende Klipsöffnungen 16 an den Längsseiten 13 des Gehäuses 11 ein. Das Gehäuse 11 besitzt weiterhin einen Sockel 17, der etwas breiter ausgeführt ist als die Taste 10. Gemäß Fig. 4 hat eine der Schmalseiten 12 des Gehäuses 11 einen schwächeren Krümmungsverlauf als die andere Schmalseite 12. Somit ist das Gehäuse 11 zwar im Querschnitt symmetrisch, im Längsschnitt jedoch unsymmetrisch. An einer Längsseite 13 des Gehäuses 11 erstreckt sich eine Befestigungslasche 18, die am Gehäuse 11 angeformt ist. Die Befestigungslasche 18 ist mit zwei Befestigungslöchern 19 zur Fixierung an der Lenkschüssel 6 des Lenkrades 1 versehen.

Im Sockel 17 des Gehäuses 11 sind zueinander beabstandete Lagerlaschen 20 vorgesehen, die eine im wesentlichen Dreieckform besitzen. An den Seitenwänden der Lagerlaschen 20 sind Lagerzapfen 21 zur Aufnahme der Tasten 10 angespritzt, die entlang einer Lagerachse 22 fluchten.

Jede der Tasten 10 weist eine im Wesentlichen dreieckförmige Querschnittsform auf. An der Oberseite jeder Taste 10 ist ein Betätigungswulst 23 ausgebildet, der annähernd achsparallel zur Lagerachse 22 ausgerichtet und zu dieser beabstandet ist. Die vom Tastenrand 24 beidseitig zum Betätigungswulst 23 verlaufenden Flächen sind die Betätigungsflächen 25 und 26. Senkrecht zur Lagerachse 22 und vom Tastenrand 24 ausgehend, ragen zu den Betätigungsflächen 25 und 26 Seitenflansche 27 hervor, welche die Seitenwände der Taste 10 bilden. Die Seitenflansche 27 sind zum Innenraum der Taste 10 hin etwas versetzt, so daß seitliche Dichtungsbunde 28 gebildet werden. Jeder Seitenflansch 27 ist mit einer Lagerbohrung 29 versehen, die sich mit dem entsprechenden Lagerzapfen 21 der Lagerlaschen 20 am Sockel 17 des Gehäuses 11 in Eingriff befindet, so daß die Taste 10 um die Lagerachse 22 betätigbar ist.

Wie insbesondere aus Fig. 5 ersichtlich ist, ist im Innenraum der Taste 10 an den Betätigungsflächen 25 und 26 jeweils ein nasenförmiges Schaltglied 30 angespritzt. Darüber hinaus ist mittig hinter dem Betätigungswulst 23 eine Rastkurve 31 angeformt.

Der Sockel 17 ist für die drei Tasten 10 in zwei äußere Sockelbereiche 32 und einen mittleren Sockelbereich 33 unterteilt. Für jede Taste 10 ragt ein in den Sockelbereichen 32 bzw. 33 hervorstehende Hülse 34, 35 und 36 mit jeweils einer Sackbohrung 37 hervor. In jede Hülse 34, 35, 36 ist ein mit einer Druckfeder 38 belasteter Rastbolzen 39 eingesetzt, wobei sich die Druckfeder 38 im Inneren der Sackbohrung 37 der Hülse 34, 35, 36 abstützt. Das vordere Endes des Rastbolzen 39 liegt an der zugehörigen Rastkurve 31 an.

In den Sockel 17 des Gehäuses 11 ist eine Kontakteinheit 40 eingesetzt, die als Leiterplatte 41 ausgebildet ist. Auf der Leiterplatte 41 sind eine Mehrzahl von Schaltelementen 42 befestigt, die als Mikroschalter 43 ausgebildet sind, wobei jeweils ein Mikroschalter 43 einer Taste 10 bzw. einer ihrer Betätigungsflächen 25 oder 26 zugeordnet ist. Die Kontakteinheit 40 wird in das Gehäuse 11 eingesetzt. Danach wird die Unterseite des Sockels 17 durch die Bodenplatte 14 derart verschlossen, daß die Klipsnasen 15 an der Bodenplatte 14 in die zugehörigen Klipsöffnungen 16 im Sockel 17 des Gehäuses 11 einrasten. Dabei kommt ein nasenförmiges Schaltglied 30 an der Rückseite einer der Betätigungsflächen 25 bzw. 26 in Anlage mit dem Schalterknopf 45 des Mikroschalters 43. Bei Betätigung der entsprechenden Betätigungsfläche 25 bzw. 26 der Taste 10 wird der zugehörige Mikroschalter 43 betätigt und löst eine Schalt- bzw. Steuerfunktion aus. Beim Loslassen der Betätigungsfläche 25 bzw. 26 der Taste 10 drückt der Schalterknopf 45 des Mikroschalters 43 gegen das Schaltglied 30, so daß die Taste 10 in ihre Ausgangsstellung zurückbewegt wird. Diese Rückbewegung wird durch den mit der Druckfeder 38 belasteten Rastbolzen 39 unterstützt, in dem die Spitze des Rastbolzens 39 gegen die Rastkurve 31 drückt. Die Rastkurve 31 weist eine zentrale Aussparung 46 auf, durch die der Rastbolzen 39 immer bestrebt ist, die Taste 10 in ihrer Ausgangsstellung zu zentrieren.

An einer Stelle 47 an der Leiterplatte 41 sind nicht sichtbare Leitungen verlötet, die über einen Ausschnitt 48 in der Bodenplatte 14 aus dem Gehäuse 11 herausführen und in einem nicht dargestellten Stecker münden. Weiterhin sind auf der Leiterplatte 41 Leuchtelemente 49 befestigt, die jeweils einer Taste 10 zugeordnet sind. Die Betätigungsflächen 25 und 26 der Taste 10 weisen eine transparente oder opake Symbolfläche 50 auf, die eine bestimmte Schalt- bzw. Steuerfunktion symbolisieren. Wird das Leuchtelement 49 aktiviert, so strahlt das Licht durch die Symbolfläche 50 in der Betätigungsfläche 25 bzw. 26 der Taste 10. Im unbeleuchteten Zustand der Taste 10 wird das Erkennen der Schalt- bzw. Steuerfunktionen durch auf den Betätigungsflächen 25 und 26 aufgebrachte, nicht dargestellte taktile Symbole ermöglicht. Den Betätigungsflächen 25 bzw. 26 zumindest der mittleren Taste 10, gegebenenfalls allen Tasten, ist ein Lichtleitkanal 51 zugeordnet, der am Sockel 17 des Gehäuses 11 ausgebildet und zur zugehörigen Symbolfläche 50 einer Betätigungsfläche 25 bzw. 26 der Taste 10 gerichtet ist. Dadurch wird die Symbolfläche 50 durch das zugehörige Leuchtelement 49 ohne Auftreten von Streulicht hinterleuchtet.

Über die Befestigungslasche 19 ist das Gehäuse 11 des Tastschalters 9 im Bereich des Lenkrades 1 derart befestigt, daß die den Lenkradkranz 7 umgreifende Hand mit ihrem Daumen 52 vor der Betätigungsfläche 25 der Taste 10 liegt und somit eine Betätigungskraft in Richtung des Pfeiles 53 in Fig. 2 eingeleitet werden kann. Die günstigste Anordnung ist dann gegeben, wenn der Betätigungswulst 23 annähernd parallel zum Lenkradkranz 7 auf der Höhe der Rückseite 55 des Lenkradkranzes 7 liegt, welche die dem Bediener abgewandte Seite des Lenkrades 1. Die andere Betätigungsfläche 26 der Taste 10 kann durch einen Finger 54 betätigt werden.

Die zwei sich diametral gegenüberliegenden Tastschalter 9 sind, wie in den Fig. 1 und 3 gezeigt, in ein in der Lenkradschüssel 6 ausgebildetes Blendenloch 56 eingesetzt. Die Kontur des Blendenloches 56 entspricht der Außenkontur des Tastschalters 9 und ist lediglich so groß, daß die Tasten 10 mit ihren Betätigungsflächen 25 und 26 und ihrem Betätigungswulst 23 dort hindurchragen und frei beweglich sind.

Die Lenkradschüssel 6 deckt auch den über die Tasten 10 hinausragenden Bereich des Gehäuses 11 ab. Die Befestigung des Tastschalters 9 am Lenkrad 1 erfolgt immer an einer Stelle, an der keine Lenkradspeichen 8 vor den Tasten 10 des Tastschalters 9 liegen. Zwischen benachbarten Tasten 10 wird ein geringfügiger Spalt 57 gebildet, um eine freie Beweglichkeit der Tasten 10 zueinander zu sichern.

Das in Fig. 1 dargestellte Lenkrad 1 besitzt insgesamt vier Lenkradspeichen 8. Der Abstand zwischen zwei Lenkradspeichen 8 ist so ausgelegt, daß die Tasten 10 des Tastenschalters 9 direkt zwischen den beiden Lenkradspeichen 8 hindurchschauen. Dadurch hat der Bediener freien Einblick auf die Tasten 10 bzw. auf deren Betätigungsflächen 25.

Jede auf den Betätigungsflächen 25 oder 26 aufgebrachte Symbolfläche bestimmt eine festgelegte Funktion, beispielsweise bezogen auf eine Radio-Kassetten-Einheit. So können den Symbolflächen der Tasten 10 z.B. die Funktionen Sender-/Spur-Suchlauffunktionen, Lautstärke-/Umschaltfunktionen oder auch die Fahrtgeschwindigkeit beeinflussende Funktionen, wie sie etwa von einer Tempomat-Einrichtung am Kraftfahrzeug bekannt sind, zugeordnet werden.

### Liste der Bezugszeichen

- 1: Lenkrad
- 2: Schaltereinheit
- 3: Mantelrohr
- 4: Lenksäule
- 5: Lenkradnabe
- 6: Lenkradschüssel
- 7: Lenkradkranz
- 8: Lenkradspeiche
- 9: Tastschalter
- 10: Taste
- 11: Gehäuse
- 12: Schmalseite
- 13: Längsseite
- 14: Bodenplatte
- 15: Klipsnase
- 16: Klipsöffnung
- 17: Sockel
- 18: Befestigungslasche
- 19: Befestigungslöcher
- 20: Lagerlasche
- 21: Lagerzapfen
- 22: Lagerachse
- 23: Betätigungswulst
- 24: Tastenrand
- 25: Betätigungsfläche
- 26: Betätigungsfläche
- 27: Seitenflansch
- 28: Dichtungsbund
- 29: Lagerbohrung
- 30: Schaltglied
- 31: Rastkurve
- 32: Sockelbereich
- 33: Sockelbereich
- 34: Hülse
- 35: Hülse
- 36: Hülse
- 37: Sackbohrung
- 38: Druckfeder
- 39: Rastbolzen
- 40: Kontakteinheit
- 41: Leiterplatte
- 42: Schaltelement
- 43: Mikroschalter
- 44: Aussparung
- 45: Schalterknopf
- 46: Aussparung
- 47: Lötstelle
- 48: Ausschnitt
- 49: Leuchtelement
- 50: Symbolfläche
- 51: Lichtleitkanal
- 52: Daumen
- 53: Pfeil
- 54: Finger
- 55: Rückseite
- 56: Blendenloch
- 57: Spalt

## Patentansprüche

1. Multifunktionstastschalter zur Befestigung an einem Lenkrad (1) eines Kraftfahrzeuges mit einem länglichen Gehäuse (11), in dem eine Schaltelemente (42) aufweisende Kontakteinheit (40) angeordnet ist, und mit mindestens einer selbsttätig rückstellenden sowie kippbar gelagerten Taste (10) mit einem auf die Schaltelemente (42) einwirkendem Schaltglied (30) und einem mit zwei gegenüberliegenden Betätigungsflächen (25;26) versehenen Betätigungswulst (23), **dadurch gekennzeichnet, daß**
- die Taste (10) mittig am Gehäuse (11) gelagert ist und einen quer zu ihrer Lagerachse (22) symmetrischen Querschnitt aufweist, wobei die Lagerachse (22) parallel zum Betätigungswulst (23) verläuft, und
- das Gehäuse (11) im Längsschnitt unsymmetrisch ausgebildet ist und an seiner Unterseite (14) im Bereich einer Längsseite (13) eine sich im Wesentlichen radial zur Lenksäule (4) des Kraftfahrzeuges erstreckende Befestigungslasche (18) aufweist.

2. Multifunktionstastschalter nach Anspruch 1, **dadurch gekennzeichnet, daß** das Gehäuse (11) zueinander beabstandete, quer zu dessen Längsachse angeordnete Lagerlaschen (20) aufweist, an denen jeweils gegenüberliegende Lagerzapfen (21) bzw. Lagerbohrungen (29) mittig ausgebildet sind.

3. Multifunktionstastschalter nach Anspruch 2, **dadurch gekennzeichnet, daß** die Taste (10) quer zu deren Lagerachse (22) angeordnete, eine Lagerbohrung (29) bzw. einen Lagerzapfen (21) aufweisende Seitenflansche (27) besitzt, die sich mit dem entsprechenden Lagerzapfen (21) bzw. der Lagerbohrung (29) der Lagerlaschen (20) des Gehäuses (11) in Eingriff befinden.

4. Multifunktionstastschalter nach Anspruch 3, **dadurch gekennzeichnet, daß** die Lagerlaschen (20) mit dem Gehäuse (11) und die Seitenflansche (27) der Taste (10) jeweils einstückig ausgebildet sind.

5. Multifunktionstastschalter nach einem der Ansprüche 1 bis 4, **dadurch gekennzeichnet, daß** jeweils ein Schaltglied (30) an der Innenseite jeder Betätigungsfläche (25;26) der Taste (10) angeformt ist, das sich im wesentlichen lotrecht zum zugeordneten Schaltelement (42) auf der Kontakteinheit (40) erstreckt.

6. Multifunktionstastschalter nach einem der Ansprüche 1 bis 5, **dadurch gekennzeichnet, daß** die Taste (10) gegen das Gehäuse (11) federbelastet ist.

7. Multifunktionstastschalter nach einem der Ansprüche 1 bis 6, **dadurch gekennzeichnet, daß** an der Innenseite des Betätigungswulstes (23) der Taste (10) eine Rastkurve(31) angeformt ist.

8. Multifunktionstastschalter nach Anspruch 7, **dadurch gekennzeichnet, daß** am Sockel (17) des Gehäuses (11) eine einen federbelasteten Rastbolzen (39) aufnehmende Hülse (34;35;36) ausgebildet ist, die zum Betätigungswulst (23) der Taste (10) gerichtet ist, wobei der Rastbolzen (29) an der Rastkurve (31) anliegt.

9. Multifunktionstastschalter nach einem der Ansprüche 1 bis 8, **dadurch gekennzeichnet, daß** die Kontakteinheit (40) mittels am Gehäuse (11) ausgebildete Klemmelemente (15;16) am Sockel (17) des Gehäuses (11) lösbar gehalten ist.

10. Multifunktionstastschalter nach einem der Ansprüche 1 bis 9, **dadurch gekennzeichnet, daß** die Kontakteinheit (40) als Leiterplatte (41) ausgebildet ist.

11. Multifunktionstastschalter nach einem der Ansprüche 1 bis 10, **dadurch gekennzeichnet, daß** die Schaltelemente (42) der Kontakteinheit (40) Mikroschalter (43), Schaltbrücken oder dergleichen sind.

12. Multifunktionstastschalter nach einem der Ansprüche 1 bis 11, **dadurch gekennzeichnet, daß** zumindest eine der Betätigungsflächen (25;26) der Taste (10) eine transparente oder opake Symbolfläche (50) aufweist, die durch ein unterhalb der Taste (10) am Sockel (17) des Gehäuses (11) angeordnetes Leuchtelement (49) beleuchtbar ist.

13. Multifunktionstastschalter nach Anspruch 12, **dadurch gekennzeichnet, daß** sich vom Sockel (17) des Gehäuses (11) lotrecht zur Symbolfläche (50) auf der Betätigungsfläche (25;26) der Taste (10) ein Streulicht abschaltender Lichtleitkanal (51) erstreckt.

14. Multifunktionstastschalter nach einem der Ansprüche 1 bis 13, **dadurch gekennzeichnet, daß** dieser zumindest drei nebeneinander angeordnete Tasten (10) umfaßt.

15. Multifunktionstastschalter nach Anspruch 14, **dadurch gekennzeichnet, daß** die mittlere oder die äußeren Tasten (10) an ihren jeweils zueinander gerichteten Seitenflanschen (27) Dichtungsbunde (28) aufweisen, die einen Spalt (57) zwischen den benachbarten Tasten (10) überbrücken.

16. Multifunktionstastschalter nach Anspruch 15, **dadurch gekennzeichnet, daß** die Tasten (10) und die Schaltelemente (42) der Kontakteinheit (40) mit unterschiedlichen Schaltfunktionen belegt sind.

17. Multifunktionstastschalter nach einem der Ansprüche 1 bis 11, 15 und 16, **dadurch gekennzeichnet, daß** die Tasten (10) und die Schaltelemente (42) der Kontakteinheit (40) mit Schaltfunktionen zum Steuern der Fahreigenschaften oder zum Steuern für ein im Kraftfahrzeug befindliches Radio- und/oder Kassettenabspiel- und/oder CD-Abspiel- und/oder CD-Wechslergerät belegt sind.

18. Multifunktionsschalter nach einem der Ansprüche 1 bis 11 und 15 bis 17, **dadurch gekennzeichnet, daß** der Rand der Längsseiten (13) und der Schmalseiten (12) des Gehäuses (11) erhaben über den Tasten (10) vorsteht.

19. Lenkrad mit einem Multifunktionstastschalter nach einem der Ansprüche 1 bis 11 in einem Lenkrad, **dadurch gekennzeichnet, daß** der Multifunktionstastschalter derart im Bereich des Lenkrades (1) eines Kraftfahrzeuges befestigt ist, daß eine den Lenkradkranz (7) des Lenkrades (1) umgreifende Hand mit ihrem Daumen (52) auf die eine Betätigungsfläche (25) der Taste (10) und mit den Fingern auf die andere Betätigungsfläche (26) einwirken kann.

20. Lenkrad mit einem Multifunktionstastschalter nach einem der Ansprüche 1 bis 11 und 19 , **dadurch gekennzeichnet, daß** der Multifunktionstastschalter derart dem Lenkradkranz (7) zugeordnet ist, daß der Betätigungswulst (23) der Taste (10) hinter dem Lenkradkranz (7) annähernd parallel und zurückversetzt an dem Lenkradkranz (7) verläuft.

21. Lenkrad mit einem Multifunktionstastschalter nach einem der Ansprüche 1 bis 11, 19 und 20, **dadurch gekennzeichnet, daß** das Gehäuse (11) mittels der Befestigungslasche (18) mit dem Lenkrad (1) verbunden ist, wobei die Betätigungsflächen (25;26) der Taste (10) durch ein Blendenloch (56) in einer die Lenkradnabe (5) umgebenden Lenkradschüssel (6) hindurchragen und im Bereich der Taste (10) keine Lenkradspeichen (8) vorgesehen sind.

22. Lenkrad mit einem Multifunktionstastschalter nach einem der Ansprüche 1 bis 15, 19 bis 21, **dadurch gekennzeichnet, daß** im Bereich des Lenkrades (1) des Kraftfahrzeuges zwei sich diametral gegenüberliegende Tastschalter (9) angeordnet sind.

## Claims

1. Multifunction push-button switch for attachment to a steering wheel (1) of a motor vehicle having an elongated housing (11), in which a contact unit (40) having switch elements (42) is arranged, and having at least one automatically resetting and tiltably mounted push-button (10) having a switch member (30) acting on the switch elements (42) and an actuating bead (23) provided with two opposing actuating surfaces (25; 26), **characterised in that**
- the push-button (10) is mounted centrally on the housing (11) and has a cross-section which is symmetrical transversely to its bearing axis (22), wherein the bearing axis (22) runs parallel to the actuating bead (23), and
- the housing (11) is designed to be unsymmetrical in longitudinal section and on its underside (14) in the region of the one longitudinal side (13) has an attachment plate (18) extending essentially radially to the steering column (4) of the motor vehicle.

2. Multifunction push-button switch according to claim 1, **characterised in that** the housing (11) has bearing plates (20) arranged transversely to its longitudinal axis and spaced from one another, on which in each case opposing bearing pins (21) or bearing bores (29) are formed centrally.

3. Multifunction push-button switch according to claim 2, **characterised in that** the push-button (10) has a bearing bore (29) or a side flange (27) having a bearing pin (21) arranged transversely to its bearing axis (22), which are engaged with the corresponding bearing pin (21) or the bearing bore (29) of the bearing plates (20) of the housing (11).

4. Multifunction push-button switch according to claim 3, **characterised in that** the bearing plates (20) are designed to be in each case integral with the housing (11) and the side flange (27) of the push-button (10).

5. Multifunction push-button switch according to one of claims 1 to 4, **characterised in that** in each case a switch member (30) is moulded onto the inner side of each actuating surface (25; 26) of the push-button (10), which extends essentially vertically to the assigned switch element (42) on the contact unit (40).

6. Multifunction push-button switch according to one of claims 1 to 5, **characterised in that** the push-button (10) is spring-loaded against the housing (11).

7. Multifunction push-button switch according to one of claims 1 to 6, **characterised in that** a locking cam (31) is moulded onto the inner side of the actuating bead (23) of the push-button (10).

8. Multifunction push-button switch according to claim 7, **characterised in that** a sleeve (34; 35; 36) receiving a spring-loaded locking bolt (39), and which is directed to the actuating bead (23) of the push-button (10), is formed on the base (17) of the housing (11), wherein the locking bolt (29) rests on the locking cam (31).

9. Multifunction push-button switch according to one of claims 1 to 8, **characterised in that** the contact unit (40) is mounted releasably on the base (17) of the housing (11) by means of clamping elements (15; 16) formed on the housing (11).

10. Multifunction push-button switch according to one of claims 1 to 9, **characterised in that** the contact unit (40) is designed as a printed circuit board (41).

11. Multifunction push-button switch according to one of claims 1 to 10, **characterised in that** the switch elements (42) of the contact unit (40) are microswitches (43), connecting bridges or the like.

12. Multifunction push-button switch according to one of claims 1 to 11, **characterised in that** at least one of the actuating surfaces (25; 26) of the push-button (10) has a transparent or opaque symbol surface (SO), which can be illuminated by a light element (49) arranged below the push-button (10) on the base (17) of the housing (11).

13. Multifunction push-button switch according to claim 12, **characterised in that** a light-conducting channel (51) switching off scattered light extends from the base (17) of the housing (11) vertically to the symbol surface (50) on the actuating surface (25; 26) of the push-button (10).

14. Multifunction push-button switch according to one of claims 1 to 13, **characterised in that** the latter comprises at least three push-buttons (10) arranged next to one another.

15. Multifunction push-button switch according to claim 14, **characterised in that** the central or the outer push-buttons (10) have sealing collars (28) on their side flanges (27) directed in each case towards one another which bridge a gap (57) between the adjacent push-buttons (10).

16. Multifunction push-button switch according to claim 15, **characterised in that** the push-buttons (10) and the switch elements (42) of the contact unit (40) are equipped with different switch functions.

17. Multifunction push-button switch according to one of claims 1 to 11, 15 and 16, **characterised in that** the push-buttons (10) and the switch elements (42) of the contact unit (40) are equipped with switch functions to control the driving properties or to control a radio and/or cassette-playing and/or CD-playing and/or CD-changing device situated in the motor vehicle.

18. Multifunction switch according to one of claims 1 to 11 and 15 to 17, **characterised in that** the edge of the longitudinal sides (13) and the narrow sides (12) of the housing (11) project raised above the push-buttons (10).

19. Steering wheel having a multifunction push-button switch according to one of claims 1 to 11, **characterised in that** the multifunction push-button switch is attached in the region of the steering wheel (1) of a motor vehicle such that a hand gripping the steering wheel rim (7) of the steering wheel (1) may influence the one actuating surface (25) of the push-button (10) with its thumb (52) and the other actuating surface (26) with the fingers.

20. Steering wheel having a multifunction push-button switch according to one of claims 1 to 11 and 19, **characterised in that** the multifunction push-button switch is assigned to the steering wheel rim (7) such that the actuating bead (23) of the push-button (10) runs behind the steering wheel rim (7) approximately parallel and set back on the steering wheel rim (7).

21. Steering wheel having a multifunction push-button switch according to one of claims 1 to 11, 19 and 20, **characterised in that** the housing (11) is joined to the steering wheel (1) by means of the attachment plate (18), wherein the actuating surfaces (25; 26) of the push-button (10) project through an aperture (56) in a steering wheel switch (6) surrounding the steering wheel hub (5) and steering wheel spokes (8) are not provided in the region of the push-button (10).

22. Steering wheel having a multifunction push-button switch according to one of claims 1 to 15, 19 to 21, **characterised in that** two diametrally opposite push-button switches (9) are arranged in the region of the steering wheel (1) of the motor vehicle.

## Revendications

1. Commutateur multifonction à bouton poussoir destiné à la fixation sur un volant de direction (1) d'un véhicule automobile comportant un boîtier oblong (11), dans lequel est agencée une unité de contact (40) comprenant des éléments de commutation (42), et comportant au moins un bouton (10) à rappelée automatiquement ainsi que montée à basculement avec un organe de commutation (30) agissant sur les éléments de commutation (42) et un renflement d'actionnement (23) muni de deux surfaces d'actionnement opposées (25 ; 26), **caractérisé en ce que**
- le bouton (10) est logé au centre sur le boîtier (11) et présente une section transversale symétrique par rapport à son axe de montage (22), ledit axe de montage (22) s'étendant parallèlement au renflement d'actionnement (23), et
- le boîtier (11) est conçu dissymétrique en section longitudinale et présente sur sa face inférieure (14) au niveau d'un côté longitudinal (13) une patte de fixation (18) s'étendant pour l'essentiel radialement à la colonne de direction (4) du véhicule automobile.

2. Commutateur multifonction à bouton poussoir selon la revendication 1, **caractérisé en ce que** le boîtier (11) comprend des pattes de support (20) distantes les unes des autres, agencées transversalement à leur axe longitudinal, sur lesquelles des tourillons de montage (21), respectivement des alésages de montage (29), opposés sont réalisés au centre.

3. Commutateur multifonction à bouton poussoir selon la revendication 2, **caractérisé en ce que** le bouton (10) dispose de brides latérales (27) agencées transversalement à leur axe de montage (22) et présentant un alésage de montage (29), respectivement un tourillon de montage (21), lesdites brides latérales se trouvant en prise avec le tourillon de montage (21), respectivement l'alésage de montage (29), correspondant des pattes de support (20) du boîtier (11).

4. Commutateur multifonction à bouton poussoir selon la revendication 3, **caractérisé en ce que** les pattes de support (20) sont réalisées chacune en une seule pièce avec le boîtier (11) et les brides latérales (27) du bouton (10).

5. Commutateur multifonction à bouton poussoir selon l'une des revendications 1 à 4, **caractérisé en ce qu'**un organe de commutation respectif (30) est formé sur la face interne de chaque surface d'actionnement (25 ; 26) du bouton (10), qui s'étend pour l'essentiel perpendiculairement à l'élément de commutation associé (42) sur l'unité de contact (40).

6. Commutateur multifonction à bouton poussoir selon l'une des revendications 1 à 5, **caractérisé en ce que** le bouton (10) est sollicité par ressort contre le boîtier (11).

7. Commutateur multifonction à bouton poussoir selon l'une des revendications 1 à 6, **caractérisé en ce qu'**une courbe d'enclenchement (31) est formée sur la face interne du renflement d'actionnement (23) du bouton (10).

8. Commutateur multifonction à bouton poussoir selon la revendication 7, **caractérisé en ce qu'**une douille (34 ; 35 ; 36) recevant un boulon d'arrêt (39) sollicité par ressort est conçue sur le socle (17) du boîtier (11), ladite douille étant orientée vers le renflement d'actionnement (23) du bouton (10), ledit boulon d'arrêt (29) s'appliquant sur la courbe d'enclenchement (31).

9. Commutateur multifonction à bouton poussoir selon l'une quelconque des revendications 1 à 8, **caractérisé en ce que** l'unité de contact (40) est maintenue amovible sur le socle (17) du boîtier (11) au moyen d'éléments de serrage (15 ; 16) réalisés sur le boîtier (11).

10. Commutateur multifonction à bouton poussoir selon l'une des revendications 1 à 9, **caractérisé en ce que** l'unité de contact (40) est conçue sous forme de plaque à circuit imprimé (41).

11. Commutateur multifonction à bouton poussoir selon l'une des revendications 1 à 10, **caractérisé en ce que** les éléments de commutation (42) de l'unité de contact (40) sont des micro-commutateurs (43), des ponts de commutation ou similaires.

12. Commutateur multifonction à bouton poussoir selon l'une des revendications 1 à 11, **caractérisé en ce qu'**au moins une des surfaces d'actionnement (25 ; 26) du bouton (10) présente une surface à symbole (50) transparente ou opaque, qui peut être éclairée par un élément lumineux (49) agencé en dessous du bouton (10) sur le socle (17) du boîtier (11).

13. Commutateur multifonction à bouton poussoir selon la revendication 12, **caractérisé en ce qu'**un guide de lumière (51) émettant de la lumière diffuse s'étend depuis le socle (17) du boîtier (11) perpendiculairement à la surface à symbole (50) sur la surface d'actionnement (25 ; 26) du bouton (10)

14. Commutateur multifonction à bouton poussoir selon l'une des revendications 1 à 13, **caractérisé en ce que** celui-ci comprend au moins trois boutons (10) agencées les uns à côté des autres.

15. Commutateur multifonction à bouton poussoir selon la revendication 14, **caractérisé en ce que** les boutons (10) centraux ou extérieurs présentent au niveau de leurs brides latérales (27) chacune orientée vers l'autre, des bandes d'étanchéité (28) qui surmontent un interstice (57) entre les boutons adjacents (10).

16. Commutateur multifonction à bouton poussoir selon la revendication 15, **caractérisé en ce que** les boutons (10) et les éléments de commutation (42) de l'unité de contact (40) sont affectés de différentes fonctions de commutation.

17. Commutateur multifonction à bouton poussoir selon l'une des revendications 1 à 11, 15 et 16, **caractérisé en ce que** les boutons (10) et les éléments de commutation (42) de l'unité de contact (40) sont affectés de fonctions de commutation en vue de la commande de caractéristiques de conduite ou en vue de la commande pour un poste de radio et/ou un lecteur de cassettes et/ou un lecteur CD et/ou un chargeur CD se trouvant dans le véhicule automobile.

18. Commutateur multifonction selon l'une des revendications 1 à 11 et 15 à 17, **caractérisé en ce que** le bord des côtés longitudinaux (13) et des côtés étroits (12) du boîtier (11) est en saillie au-dessus des boutons (10).

19. Volant de direction comportant un interrupteur multifonction à bouton poussoir selon l'une des revendications 1 à 11, **caractérisé en ce que** l'interrupteur multifonction à bouton poussoir est fixé de telle manière au niveau du volant de direction (1) d'un véhicule automobile qu'une main saisissant la couronne de volant (7) du volant de direction (1) peut agir avec son pouce (52) sur l'une des surfaces d'actionnement (25) du bouton e (10) et avec les doigts sur l'autre surface d'actionnement (26).

20. Volant de direction comportant un interrupteur multifonction à bouton poussoir selon l'une des revendications 1 à 11 et 19, **caractérisé en ce que** l'interrupteur multifonction à bouton poussoir est associé de telle manière à la couronne de volant (7) que le renflement d'actionnement (23) du bouton (10) évolue à peu près parallèlement derrière la couronne de volant (7) et en retrait au niveau de la couronne de volant (7).

21. Volant de direction comportant un interrupteur multifonction à bouton poussoir selon l'une des revendications 1 à 11, 19 et 20, **caractérisé en ce que** le boîtier (11) est relié avec le volant de direction (1) au moyen de la patte de fixation (18), les surfaces d'actionnement (25 ; 26) du bouton (10) passant à travers un trou aveugle (56) dans une cuve de volant de direction (6) entourant le moyeu du volant de direction (5) et aucun rayon de volant de direction (8) n'étant prévu au niveau du bouton (10).

22. Volant de direction comportant un interrupteur multifonction à bouton poussoir selon l'une des revendications 1 à 15, 19 à 21, **caractérisé en ce que** deux commutateurs à bouton poussoir diamétralement opposés (9) sont agencés dans la zone du volant de direction (1) du véhicule automobile.
